(19) Europäisches Patentamt / European Patent Office / Office européen des brevets

(11) **EP 4 685 676 A1**

(12) **DEMANDE DE BREVET EUROPEEN**

(43) Date de publication:
**28.01.2026   Bulletin 2026/05**

(21) Numéro de dépôt: **25172060.3**

(22) Date de dépôt: **23.04.2025**

(51) Classification Internationale des Brevets (IPC):
**G06F 21/32** *(2013.01)*      **G06V 40/16** *(2022.01)*
**G06V 40/40** *(2022.01)*      **G06V 10/141** *(2022.01)*

(52) Classification Coopérative des Brevets (CPC):
**G06F 21/32; G06V 10/141; G06V 40/168;
G06V 40/172; G06V 40/40**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité:   **24.07.2024   FR 2408186**

(71) Demandeur: **Idemia Public Security France
92400 Courbevoie (FR)**

(72) Inventeurs:
• **BEAUDET, Jean
  92400 COURBEVOIE (FR)**
• **AUQUE-PALLEZ, Ariel
  92400 COURBEVOIE (FR)**

(74) Mandataire: **IPS
2, place Samuel de Champlain
92400 Courbevoie (FR)**

(54)   **PROCÉDÉ DE SÉCURISATION D'ACCÈS À UNE SOURCE DE DONNÉES**

(57)   La présente invention concerne un procédé de sécurisation d'accès distant à des données à partir d'un terminal (1) utilisateur comportant une source lumineuse (5) et une caméra (3), par:
- acquisition d'un signal temporel vidéo par la caméra (3) ;
- pilotage de la source lumineuse (5) selon un signal émis temporellement variable imposé dont au moins un paramètre est invariant temporellement et de valeur fixée aléatoirement;
- évaluation , à partir d'images du signal temporel acquis, de fraude par :
- estimation d'une contribution du signal émis imposé au signal temporel vidéo acquis en fonction dudit paramètre
- évaluation d'un niveau de bruit du signal temporel vidéo acquis ;
- calcul d'un rapport signal sur bruit par division de la contribution par le niveau de bruit;,

- autorisation de poursuite de l'accès à la source de données en fonction du rapport signal sur bruit calculé.

[Fig. 1]

Fig. 1

**Description**

**Arrière-Plan** technologique

La présente invention concerne le domaine de la sécurisation des accès distants à des sources de données, que ce soit lors d'un enrôlement (en vue d'une création de compte en ligne par exemple), ou lors d'une consultation (du compte). En effet, les applications mobiles conditionnent usuellement les accès à distance à une authentification biométrique de l'utilisateur sur son terminal connecté (tel que téléphone mobile, montre connectée, tablette ou ordinateur). Pour ce faire, une acquisition à distance d'une image du visage de l'utilisateur est mise en œuvre par une caméra du terminal connecté de manière à pouvoir authentifier l'utilisateur. Néanmoins, des fraudes existent lors de ce type d'acquisition, il est donc nécessaire de sécuriser cette étape et de détecter les fraudes potentielles, notamment les fraudes par injection (émulation d'une caméra virtuelle) (appelées en anglais : « Injection Attack ») ou par présentation (appelée en anglais : « Presentation Attack »), ce qui inclut notamment les fraudes montrées sur papier, écran.
Il est connu, par exemple dans le document FR3100074, de demander à l'utilisateur d'exécuter un geste déterminé aléatoirement mais ceci peut être incommodant pour l'utilisateur, en particulier si ce dernier souffre d'un handicap affectant sa mobilité.

Présentation de l'invention

L'invention a pour but de remédier au moins en partie à ces inconvénients et préférentiellement à tous, et vise notamment à proposer une méthode de sécurisation d'accès distant à une source de données qui soit robuste aux fraudes par injection ou par présentation et accessible à tous, sans inconfort ni effort de la part de l'utilisateur.
Selon un aspect de l'invention, il est proposé un procédé de sécurisation d'accès distant à une source de données à partir d'un terminal par un utilisateur dudit terminal, le terminal comportant une source lumineuse et une caméra orientées vers ledit utilisateur, ledit procédé comportant des étapes de :

- acquisition d'un signal temporel vidéo par la caméra;
- pilotage, pendant l'étape d'acquisition, de la source lumineuse selon un signal émis temporellement variable imposé périodique dont au moins un paramètre est invariant temporellement et de valeur fixée aléatoirement;

- évaluation , à partir d'une première série d'images du signal temporel acquis, d'une présence de fraude par injection par :
- estimation d'une contribution du signal émis imposé au signal temporel vidéo acquis en fonction dudit paramètre

  - évaluation d'un niveau de bruit du signal temporel vidéo acquis ;
  - comparaison de la contribution par rapport au niveau de bruit;

- autorisation de poursuite de l'accès à la source de données en fonction du résultat de l'étape de comparaison.

Ce procédé permet d'adresser les inconvénients énumérés précédemment et s'applique préférentiellement sur un terminal mobile connecté (tel que téléphone mobile, montre connectée, tablette ou ordinateur). Il permet ainsi de sécuriser l'accès aussi bien dans un contexte d'enrôlement (par exemple pour la création d'un compte en banque), ou dans un contexte de consultation (par exemple pour une preuve d'identité dans le cadre d'une démarche administrative, ou la consultation de comptes en ligne). Le procédé peut également s'appliquer dans le cadre d'un terminal fixe (comme un kiosque d'aéroport ou un système d'accès physique, la source de données distante étant alors par exemple une liste des personnes autorisée d'accès). En effet, la nature aléatoire (incluant pseudo aléatoire) du signal constitue un défi et permet de vérifier que la vidéo acquise a été acquise par la caméra du terminal et image l'utilisateur face caméra en temps réel au moment de l'acquisition par la caméra du terminal et non à partir d'un objet tiers ou enregistrée à un autre moment que ledit moment d'acquisition. En effet, ce procédé, notamment par l'analyse du signal temporel vidéo acquis, comportant notamment des informations selon trois dimensions : hauteur, largeur de l'image, temps, pour un (ou plusieurs) canal (par composante couleur), permet de s'assurer que la vidéo acquise a été acquise par la caméra du terminal et permet en outre d'être robuste aux fraudes sur écran ou par présentation de photo imprimée par exemple. Le paramètre et sa valeur étant connus à l'étape d'évaluation, le procédé ne nécessite pas d'estimation du paramètre du défi dans le signal acquis, ni de synchronisation particulière avec un évènement dédié pour identifier une séquence dédiée, il n'y a donc pas besoin d'analyser et de comparer les images acquises et attendues une à une, ce qui rend le procédé plus flexible et moins consommateur de mémoire. Finalement, si le score traduit une présence de fraude, l'accès à la source de données ne peut pas se poursuivre.
De manière avantageuse, le procédé peut comporter une étape intermédiaire de détermination de la probabilité de fraude par injection, ou présentation, en fonction du rapport signal sur bruit calculé ;

**avec autorisation** de poursuite de l'accès à la source de données si la probabilité de fraude par injection, ou présentation, est inférieure à un premier seuil prédéterminé.

De manière équivalente, il peut être déterminé une probabilité de non-fraude par injection, ou présentation, et dans ce cas la condition de seuil s'applique si ladite probabilité est supérieure à un autre premier seuil prédéterminé.

Avantageusement, la contribution est exprimée sous forme d'une valeur, unique (globale) ou vectorielle (dit encore matricielle) temporelle (telle que sous forme d'un signal) ou non (telle que sous la forme d'une énergie).

Dans un mode de réalisation, le signal émis temporellement variable imposé est une composante couleur périodique dont le paramètre invariant temporellement est une fréquence fondamentale, ce qui permet une mise en œuvre simple du signal imposé et une analyse spectrale simple et rapide du signal acquis. En outre pour un signal périodique imposé donné, qui comporte par exemple plusieurs composantes couleurs, ces dernières peuvent être différenciées, avec des fréquences fondamentales différentes entre elles.

Dans un mode de réalisation, le signal émis temporellement variable imposé comporte au moins deux composantes couleur périodiques de même fréquence fondamentale ou multiples d'une même fréquence fondamentale, avec un déphasage entre lesdites au moins deux composantes, ledit au moins un paramètre invariant temporellement du signal imposé étant ladite fréquence fondamentale ou le déphasage. Ceci permet notamment de disposer de plusieurs paramètres invariants possible ou de les combiner : une fréquence fondamentale, par exemple de valeur unique et identique pour chaque composante couleur temporellement variable du signal imposé, et un déphasage entre lesdites composantes, ce qui rend le défi plus diversifié.

Préférentiellement, dans le spectre visible, seules la composante rouge et la composante bleue sont imposées, ce qui facilite l'analyse car ce choix rend le procédé robuste à la diaphonie des couleurs (appelée en anglais : « color crosstalk») lié au fait par exemple que le canal rouge de la caméra voit un peu le canal voisin vert de la source lumineuse, la composante verte restant invariable dans le temps.

Avantageusement, le signal temporellement variable imposé est appliqué à une composante infrarouge, ce qui permet de mettre en œuvre le procédé par variation lumineuse en dehors des longueurs d'onde visibles sans que l'utilisateur ne s'en aperçoive.

Dans un mode de réalisation, la fréquence fondamentale imposée est fixée aléatoirement dans une plage de travail entre 0,5Hz et 3Hz, ce qui favorise le bien-être de l'utilisateur et permet de recourir à un échantillonnage standard de 15 images par seconde par exemple, la fréquence fondamentale pouvant être unique pour toutes les composantes concernées ou différenciée par composante.

Avantageusement, une détermination de valeur de chaque paramètre invariant fixé aléatoirement est mise en œuvre par tirage aléatoire parmi un ensemble de valeurs de la plage de travail relative audit paramètre invariant ou par tirage pseudo-aléatoire parmi ledit ensemble de valeurs dont sont exclues les valeurs précédemment déterminées dudit paramètre invariant pour ledit même terminal et/ou utilisateur.

Avantageusement, lesdites valeurs précédemment déterminées pour ledit même terminal et/ou utilisateur sont mémorisées dans un registre d'exclusion en association avec un identifiant de terminal et/ou un identifiant biométrique utilisateur à qui elles ont été appliquées.

Dans un mode de réalisation, le terminal comporte un écran d'affichage, la source lumineuse étant tout ou partie de l'écran d'affichage du terminal et le pilotage de la source lumineuse correspondant à un affichage sur tout ou partie de l'écran de couleur variant selon le signal temporellement variable imposé. Ce mode préférentiel, permet de conserver la tenue du terminal de manière habituelle, notamment si le terminal est une tablette ou un téléphone mobile, sans avoir, par exemple à le retourner, ce qui évite donc des difficultés de manipulations et reste discret.

Avantageusement, au moins une composante couleur temporellement variable imposée est de type créneaux, ce qui permet de piloter un signal simple.

Avantageusement, le signal temporellement variable imposé est de type sinusoïdal, c'est-à-dire que la composante ou l'au moins une des composantes couleur temporellement variables imposées est de type sinusoïdal, ce qui est simple à piloter, et notamment si les deux composantes couleur temporellement variables du signal sont sinusoïdales, l'analyse spectrale est encore simplifiée car un seul pic apparait par composante couleur.

Avantageusement, au moins une composante couleur temporellement variable imposée est de type triangulaire, ce qui permet un pilotage aisé.

Avantageusement, les composantes couleur temporellement variables imposées sont de types différents, avec par exemple une composante bleue triangulaire et une composante rouge sinusoïdale, ce mélange permettant d'augmenter la diversité du défi.

Dans un mode de réalisation, l'estimation de la contribution comporte un filtrage temporel passe-bande ou une sélection de composante prédéterminée d'une transformation de Fourier rapide du signal temporel vidéo acquis, ou une corrélation avec le signal émis imposé. Ceci permet notamment d'isoler facilement la contribution du signal émis imposé au signal temporel vidéo acquis puisque le paramètre invariant est connu.

Dans un mode de réalisation, la contribution s'exprime sous forme d'une énergie, l'évaluation du niveau de bruit du signal temporel vidéo acquis étant mise en œuvre par calcul d'une énergie d'un signal résiduel correspondant à la soustraction d'une moyenne temporelle du signal temporel vidéo acquis audit signal temporel vidéo acquis, ce qui permet d'intégrer la dimension temporelle et de définir un niveau de bruit du signal temporel vidéo acquis simplifiant les comparaisons ultérieures. Le niveau de bruit ainsi évalué par le calcul de l'énergie du signal résiduel peut être obtenu par le calcul de l'énergie du signal résultant de la soustraction d'une moyenne temporelle du signal temporel vidéo acquis audit signal temporel vidéo acquis ou de manière alternative équivalente en deux étapes : par application au signal acquis d'un filtre passe bande correspondant à la plage de travail puis calcul de l'énergie du signal acquis ainsi filtré à laquelle est retranché l'énergie de la contribution, le résultat étant le niveau de bruit dudit signal temporel vidéo acquis.

Selon un mode de réalisation, l'étape de comparaison de la contribution par rapport au niveau de bruit comporte un calcul d'un rapport signal sur bruit par division de la contribution par le niveau de bruit, ce qui permet ensuite à l'étape autorisation de poursuite de l'accès à la source de données d'autoriser l'accès en fonction du rapport signal sur bruit calculé.

Dans un mode de réalisation, à l'étape d'évaluation, à partir d'une première série d'images du signal temporel acquis, d'une présence de fraude par injection :

- au moins une zone d'intérêt est déterminée , dans chaque image de la première série, ladite zone d'intérêt étant commune aux images de la première série, (c'est-à-dire imageant une même surface de l'objet acquis, par exemple visage d'une personne, sur lesdites images de la première série)
- un signal temporel observé représentatif des valeurs de pixels des images de la première série d'images sur tout ou partie de la zone d'intérêt est déterminé ;
- lors de l'estimation ledit signal temporel de la première série d'images est ledit signal temporel observé déterminé par zone d'intérêt. Ce qui permet de discrétiser les étapes du procédé par zones d'intérêt en analysant un signal par zone d'intérêt (en appliquant le procédé en parallèle sur chaque zone d'intérêt ou en l'appliquant à un vecteur de signaux) de manière à réduire la charge de calcul pour le processeur en charge de l'exécution d'étape de calcul, ou à faciliter un calcul sur des processeurs parallélisés. Un autre avantage est de se concentrer sur une zone unique globale (par exemple la partie haute du visage) ou sur des zones d'intérêt significatives pour la détection de fraude.

Dans un mode de réalisation, l'étape de

- évaluation d'un niveau de bruit du signal temporel vidéo acquis ; ou
- comparaison de la contribution par rapport au niveau de bruit, préférentiellement par calcul du rapport signal sur bruit par division de la contribution par le niveau de bruit, comprend un calcul de moyenne, notamment pondérée par zone d'intérêt, ou de médiane desdites zones d'intérêt de manière à ce que le rapport signal sur bruit calculé soit global.

Dans un mode de réalisation, le procédé comporte :

- une étape d'évaluation, à partir d'une deuxième série d'images de l'acquisition, d'une présence de fraude par présentation par :
- détermination d'au moins une surface caractéristique, dans chaque image de la deuxième série, ladite surface caractéristique étant commune aux images de la deuxième série (c'est-à-dire imageant une même surface de l'objet acquis, par exemple visage d'une personne, sur lesdites images de la deuxième série),
- détermination d'un signal temporel observé par surface caractéristique,
- estimation, par surface caractéristique, de la contribution du signal imposé au signal observé de manière à former un vecteur de retour,
- détermination d'un score par application d'un classifieur audit vecteur,

et l'étape d'autorisation de poursuite de l'accès à la source de données étant fonction du score déterminé. Cette vérification complémentaire, par analyse de la réponse de l'objet capturé à l'éclairage temporellement variable émis par la source lumineuse pilotée permet de sécuriser l'accès aux données. Cette vérification complémentaire permet d'être robuste aux fraudes sur écran ou par présentation de photo imprimée par exemple, et permet de prendre en considération une ou des surface(s) caractéristique(s) dédiée(s) significatives du point de vue de la réflexion attendue en lien avec la forme locale attendue de l'utilisateur dans cette dite surface caractéristique, et également de réduire la taille des données à transmettre dans le cas d'une étape d'estimation de la contribution, qui est réalisée comme précédemment, et/ou d'une étape de détermination du score déportée sur un serveur distant par exemple.

Dans un mode de réalisation, la zone d'intérêt ou la surface caractéristique appartient à une région d'intérêt détectée imageant tout ou partie d'un visage, supposément de l'utilisateur du terminal, ce qui ne demande pas de manipulation spécifique à l'utilisateur du terminal, ce dernier étant habitué à l'orienter vers son visage, la caméra frontale réalisant l'acquisition.

Avantageusement, préalablement à l'étape de détermination de la zone d'intérêt ou de la surface caractéristique, est mis en œuvre, pour chaque image de la série, une étape d'alignement spatial desdites images de la première ou respectivement deuxième série par rapport à un point de référence de la région d'intérêt détectée, par exemple par recalage des yeux, ce qui permet de faciliter la détermination de zone d'intérêt ou surface caractéristique correspondant par exemple à la même portion du visage dans les différentes images de la première ou respectivement deuxième série.

Avantageusement, la zone d'intérêt ou surface caractéristique est un triangle d'un maillage de la région d'intérêt, ou un pixel au voisinage d'un point d'intérêt de la région d'intérêt, ladite zone d'intérêt ou surface caractéristique étant présente dans toutes les images de la première ou respectivement deuxième série d'images. Par exemple, un point d'intérêt est un point sémantique du visage.

Avantageusement, zone d'intérêt et surface caractéristique sont distinctes, ce qui permet de focaliser l'analyse sur des endroits distincts du visage en fonction du type d'analyse de fraude effectuée.

Alternativement, zone d'intérêt et surface caractéristique sont identiques de manière à pouvoir mutualiser les étapes de détection de ces dernières.

Avantageusement, ledit classifieur est mis en œuvre par un réseau de neurones, ce qui permet un traitement rapide avec de bonnes performances de classification.

De manière avantageuse, le procédé peut comporter une étape intermédiaire de détermination de la probabilité de fraude par présentation en fonction du score déterminé ; avec autorisation de poursuite de l'accès à la source de données si la probabilité de fraude par présentation est inférieure à un deuxième seuil prédéterminé, ce qui permet notamment une normalisation du rapport calculé permettant ensuite une comparaison de la probabilité obtenue audit deuxième seuil prédéterminé, quel que soit le type de paramètre invariant.

De manière équivalente, il peut être déterminé une probabilité de non de fraude par présentation et dans ce cas la condition de seuil s'applique si ladite probabilité est supérieure à un autre deuxième seuil prédéterminé.

Avantageusement, si plusieurs signaux temporels temporellement variables sont imposés, autant de signaux temporels sont observés par surface caractéristique, le vecteur de retour étant formé d'autant de sous-vecteurs que de signaux temporellement variables imposés, ce qui permet de disposer en entrée du classifieur d'un vecteur de vecteurs (appelé aussi matrice, avec par exemple autant de colonnes que de signaux imposés (composantes couleurs périodiques notamment) et autant de lignes que de surface caractéristique) robustifiant le classifieur.

De manière avantageuse, le procédé peut comporter une étape de détermination par surface caractéristique d'une contribution des autres sources d'éclairage par soustraction de la contribution du signal imposé au signal variable observé de manière à former un sous-vecteur du vecteur de retour, ce qui permet d'utiliser un vecteur de vecteurs en entrée du classifieur, le rendant plus performant. En outre, dans la mesure où la contribution du signal imposé au signal acquis est faible, on peut aussi approximer la contribution des autres sources d'éclairage par une simple moyenne temporelle du signal acquis.

Dans un mode de réalisation, le procédé comporte une étape d'évaluation, à partir d'une troisième série d'images de l'acquisition, d'une présence de fraude spécifique par recapture ou injection par :

- détermination d'une latence observée en fonction de la fréquence fondamentale du signal temporellement variable périodique imposé et d'un déphasage estimé entre le signal temporel périodique imposé et un signal temporel observé représentatif des valeurs de pixels des images de la troisième série d'images sur tout ou partie de la région d'intérêt détectée commune auxdites images de la troisième série d'images,
- calcul d'une différence entre la latence observée et une latence de référence obtenue préalablement pour ledit terminal ou pour un même modèle de terminal,

et l'autorisation de poursuite de l'accès à la source de données étant fonction de la différence de latence calculée. Cette étape additionnelle permet de vérifier la cohérence entre le temps de latence observé et le temps de latence de référence et ainsi de mieux identifier les fraudes par recapture ou injection.

De manière avantageuse, le procédé peut comporter une étape intermédiaire de - détermination de la probabilité spécifique de fraude par recapture ou injection en fonction de la différence des latences calculée, avec autorisation de poursuite de l'accès à la source de données si la probabilité spécifique de fraude par recapture ou injection est inférieure à un troisième seuil prédéterminé, ce qui permet notamment une normalisation de la différence des latences calculée permettant ensuite une comparaison de la probabilité spécifique audit troisième seuil prédéterminé.

De manière équivalente, il peut être déterminé une probabilité spécifique de non-fraude par recapture ou injection et dans ce cas la condition de seuil s'applique si ladite probabilité est supérieure à un autre troisième seuil prédéterminé.

Avantageusement, un paramètre d'acquisition de la caméra, notamment une taille d'image, est modifié pendant l'acquisition avec augmentation de la probabilité spécifique de fraude par recapture ou injection en absence de modification de la latence observée pendant l'acquisition.

Avantageusement, la deuxième ou troisième série d'images de l'acquisition et la première série d'images de l'acquisition sont identiques.

Selon un autre aspect de l'invention, il est proposé un programme informatique comprenant des instructions adaptées à la mise en œuvre de chacune des étapes du procédé selon l'invention lorsque ledit programme est exécuté sur un ordinateur.

Selon un autre aspect de l'invention, il est proposé un moyen de stockage non transitoire d'informations, amovible ou non, partiellement ou totalement lisible par un ordinateur ou un microprocesseur comportant des instructions de code d'un programme informatique pour l'exécution de chacune des étapes du procédé selon l'invention.

Avantageusement, un dispositif selon l'invention comporte ledit terminal et une unité de traitement de l'information mettant en œuvre ledit procédé, l'unité de traitement comportant ledit moyen de stockage non transitoire d'informations, l'unité de traitement pouvant être localisée dans le terminal ou répartie entre le terminal et un serveur distant, ce qui permet de disposer d'un dispositif avec une architecture sécurisée de fonctionnement.

Présentation des figures

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :

[fig.1] la figure 1 montre de façon schématique une personne présentant son visage à un terminal lors de la mise en œuvre du procédé de sécurisation selon un mode de réalisation possible de l'invention,
[fig.2] la figure 2 représente un bloc-diagramme schématique d'une unité de traitement de l'information d'un dispositif apte à mettre en œuvre un ou plusieurs modes de réalisation de l'invention,
[fig.3] la figure 3 montre un schéma de principe d'étapes mises en œuvre dans le procédé de sécurisation, selon un mode de réalisation possible de l'invention,
[fig.4] la figure 4 montre un schéma de principe d'étapes complémentaires mises en œuvre dans le procédé de sécurisation, selon un mode de réalisation possible de l'invention, et [fig.5] la figure 5 montre un schéma de principe d'étapes additionnelles mises en œuvre dans le procédé de sécurisation, selon un mode de réalisation possible de l'invention.

Des références identiques seront utilisées d'une figure à l'autre pour désigner des éléments identiques ou similaires, dans leur forme ou dans leur fonction.

Pour un motif de concision le terme sensiblement désigne les valeurs à plus ou moins 10%.

Description détaillée

L'invention peut s'appliquer dans différents contextes. L'exemple de réalisation illustré se place dans le contexte de sécurisation d'accès distant à une source de données à partir d'un terminal utilisateur, ici un téléphone mobile intelligent (en anglais « smartphone »), par un utilisateur du terminal mobile, le téléphone mobile comportant une source lumineuse, ici une partie de l'écran du téléphone mobile, et une caméra frontale orientées vers l'utilisateur pour acquérir des images de son visage. Un autre exemple de réalisation (non illustré ici) de l'invention concerne l'acquisition d'une autre caractéristique biométrique, telle qu'un dermatoglyphe de l'utilisateur du téléphone mobile, par exemple par la caméra (principale) arrière du téléphone mobile, la source lumineuse étant par exemple le flash de ladite caméra arrière. Dans tous les cas, il s'agit de détecter des fraudes en pilotant le signal lumineux de telle façon que ses variations aient une propriété invariante dans le temps, fixée aléatoirement.

Le procédé selon l'invention peut être utilisé dans diverses applications. Notamment, l'invention peut viser à mettre en œuvre une méthode de surveillance d'un conducteur, ou à mettre en œuvre une détection de fraude dans le cadre d'une authentification biométrique en vue d'un enrôlement ou d'une consultation de données. Dans tous les cas, une estimation d'une contribution du signal imposé à un signal temporel acquis est exécutée, en connaissance du paramètre invariant et un niveau de bruit du signal temporel vidéo acquis est exploité pour déterminer la présence ou non de fraude.

Pour des raisons de simplicité et de façon illustrative et non limitative, l'invention sera ci-dessous présentée dans le cadre d'un procédé biométrique d'authentification d'un visage, mais les enseignements peuvent être utilisés pour toute application impliquant l'acquisition d'un visage. Dans ce cadre, pour permettre de vérifier l'authenticité ou non du visage présenté, l'action effectuée par l'unité de traitement est une mise en œuvre d'une méthode de détection de fraude par calcul d'un rapport signal sur bruit par division de la contribution par le niveau de bruit.

Le temps de latence correspond au temps de réponse de l'ensemble d'une chaine d'acquisition, à savoir du terminal et se décompose notamment en un délai d'éclairage par la source lumineuse (notamment d'affichage par l'écran) et un délai d'acquisition de la caméra.

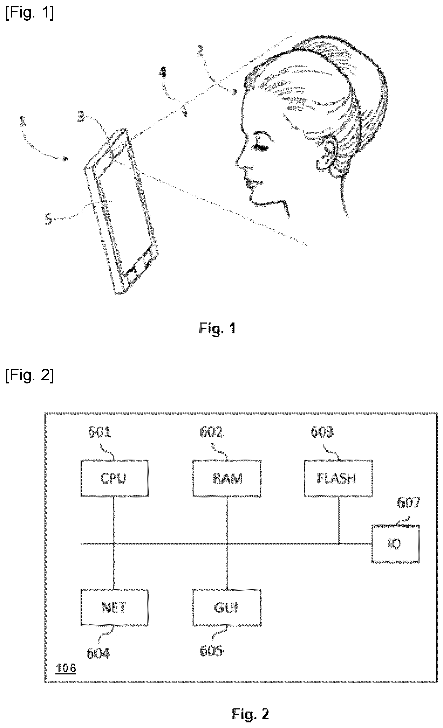

En référence à la figure 1, le procédé d'authentification peut être mis en œuvre au moyen d'un dispositif comprenant un terminal 1 auquel un visage 2 d'un utilisateur est présenté. Le terminal 1 comprend une unité de traitement de l'information et une caméra 3 adaptée pour acquérir des flux d'images d'objets présentés dans son champ d'acquisition 4. De préférence, le terminal 1 comprend également un écran 5 capable d'afficher des images à l'utilisateur, et est configuré de sorte que l'utilisateur puisse simultanément présenter son visage 2 dans le champ d'acquisition 4 de la caméra 3, et regarder l'écran 5. Le terminal 1 peut ainsi être par exemple un terminal mobile de type téléphone mobile (notamment "smartphone"), montre connectée, ou tablette qui présente typiquement une configuration idéale avec un écran 5 de dimension large et un poids léger qui permet un maniement en mode selfie similaire à un téléphone mobile. Le terminal 1 peut néanmoins être tout type de dispositif informatisé, et peut en particulier être un ordinateur avec caméra ou une borne fixe dédiée aux contrôles d'identité, par exemple installée dans un aéroport. Le terminal 1 peut encore être un sous-système électronique embarqué dans un véhicule formant un système connecté de reconnaissance du conducteur, ou d'accès à des applications pour le conducteur ou le passager. L'unité de traitement de l'information comprend au moins un processeur et une mémoire, et permet d'exécuter un programme informatique pour la mise en œuvre du procédé selon l'invention.

La figure 2 est un exemple de bloc-diagramme schématique d'une unité de traitement de l'information 106 pour la mise en œuvre d'un ou plusieurs modes de réalisation de l'invention. L'unité de traitement de l'information 106 comprend typiquement au moins un calculateur, ordinateur ou un microprocesseur ou tout autre dispositif permettant l'exécution d'un programme informatique en charge du contrôle des différentes étapes du procédé selon l'invention. L'unité de traitement de l'information 106 comporte un bus de communication connecté à :

- une unité centrale de traitement 601, tel qu'un microprocesseur, notée CPU ;
- une mémoire transitoire 602, notée RAM, pour mémoriser le code exécutable du procédé de réalisation de l'invention ainsi que les registres adaptés à enregistrer des variables et des paramètres nécessaires pour la mise en œuvre du procédé selon des modes de réalisation de l'invention ; la capacité de mémoire du dispositif peut être complétée par une mémoire RAM optionnelle connectée à un port d'extension, par exemple ;
- une mémoire non transitoire 603, notée FLASH, pour stocker les programmes informatiques et données de calibration pour la mise en œuvre des modes de réalisation de l'invention ; les programmes informatiques stockés comprennent notamment un programme informatique comprenant des instructions adaptées à la mise en œuvre de chacune des étapes du procédé selon l'invention lorsque ledit programme est exécuté sur l'unité de traitement 106, ladite mémoire FLASH 603 est alors un exemple de moyen non-transitoire de stockage d'informations, amovible ou non, partiellement ou totalement lisible par un ordinateur ou un microprocesseur comportant des instructions de code du programme informatique pour l'exécution de chacune des étapes du procédé selon l'invention ;

- une interface réseau 604, notée NET, est normalement connectée à un réseau de communication sur lequel des données numériques à traiter sont transmises ou reçues ; L'interface réseau 604 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lues à partir de l'interface de réseau pour la réception sous le contrôle de l'application logiciel exécuté dans le processeur 601 ;
- une interface utilisateur GUI 605 pour recevoir des entrées d'un utilisateur ou pour afficher des informations à un utilisateur notamment des informations de guidage (vocales et/ou visuelles), comportant ici notamment l'écran 5 ;
- un module d'entrée/sortie 607 pour la réception / l'envoi de données depuis / vers des périphériques externes tels que disque dur, support de stockage amovible ou autres.

Le code exécutable peut être stocké dans la mémoire non volatile 603, par exemple une mémoire flash ou une mémoire morte, ou sur un support amovible numérique tel que par exemple un disque. Selon une variante, le code exécutable des programmes peut être reçu au moyen d'un réseau de communication, via l'interface réseau 604, afin d'être stocké dans l'un des moyens de stockage de l'unité de traitement de l'information 106, tel que la mémoire FLASH 603, avant d'être exécuté.

L'unité centrale de traitement 601 est adaptée pour commander et diriger l'exécution des instructions ou des portions de code logiciel du programme ou des programmes selon l'un des modes de réalisation de l'invention, instructions qui sont stockées dans l'un des moyens de stockage précités, tel que la mémoire FLASH 603. Après la mise sous tension, le CPU 601 est capable d'exécuter des instructions de la mémoire RAM transitoire 602, relatives à une application logicielle. Un tel logiciel, lorsqu'il est exécuté par le processeur 601, provoque l'exécution du procédé selon l'invention.

Dans ce mode de réalisation, l'appareil est un appareil programmable qui utilise un logiciel pour mettre en œuvre l'invention. Toutefois, à titre subsidiaire, la présente invention peut être mise en œuvre dans le matériel (par exemple, sous la forme d'un circuit intégré spécifique ou ASIC (de l'anglais *application-specific integrated circuit)* ou sous la forme d'un composant logique programmable ou FPGA (de l'anglais *field-programmable gate array*).

L'unité de traitement de l'information 106 telle qu'illustrée est locale dans le terminal 1, ce qui est par exemple l'architecture privilégiée dans le cas d'un terminal fixe, par exemple une borne fixe dédiée aux contrôles d'identité, car ces bornes sont sécurisées sans accès utilisateur, et c'est alors davantage la fraude par recapture qui est critique et surveillée par le procédé selon l'invention. L'unité de traitement de l'information 106 peut en variante être externe au terminal 1, ou distribuée et comporter de multiples sous unités de traitement, notamment au moins en partie externe au terminal 1 (notamment dans le cas d'un terminal mobile tel que précédemment illustré) communiquant entre elles via l'interface réseau. De même, en fonction de la nature du terminal notamment, tout ou partie de la mémoire peut être physiquement déportée, hébergée par exemple sur un serveur distant. Par exemple, pour un terminal 1 fixe notamment, le terminal est maître et les modules d'initialisation, d'acquisition et de pilotage sont hébergés localement dans le terminal utilisateur 1 mais les autres modules peuvent ne pas être, ou en partie seulement, hébergés localement mais dans une entité de traitement physiquement déportée esclave, telle qu'un serveur distant, ce partage des calculs entre terminal utilisateur 1 local et serveur distant permet de n'envoyer au serveur distant que les informations nécessaires à la prise de décision et ainsi de minimiser le temps de réponse lié à l'échange de données et le débit réseau, sans compromettre la sécurité côté client liée à de l'ingénierie inverse. Le terminal 1 peut par exemple échanger avec le serveur distant les informations biométriques acquises tel qu'illustré dans le document FR1661737. On peut y compris avoir des calculs redondants, le serveur distant vérifiant tout ou partie de ce qu'a fait le terminal 1. En variante, notamment, pour un terminal 1 mobile, mais applicable à tout type de terminal, le serveur distant est le maître et le terminal utilisateur 1 l'esclave, de manière à ce que le paramètre invariant soit défini et son tirage aléatoire exécuté par le serveur distant, puis le signal imposé transmis au terminal utilisateur de manière à ce que ce dernier mette en œuvre le pilotage en conséquence, ce qui permet de maximiser la sécurité du terminal 1 utilisateur et de prévenir un rejeu du côté du terminal utilisateur, ce dernier ne décidant pas unilatéralement du défi et étant agnostique du paramètre invariant choisi et/ou de sa valeur quand la consigne de pilotage est avantageusement envoyée en temps réel par le serveur au terminal utilisateur. De même, le terminal 1 utilisateur peut ensuite envoyer au serveur distant directement les signaux acquis bruts pour minimiser les calculs locaux et réduire les risques liés à de l'ingénierie inverse côté client ou au contraire les informations directement nécessaires à la prise de décision (par exemple le rapport signal sur bruit) pour minimiser la charge réseau et le temps de réponse lié à l'échange de données et dépendant du débit réseau. En outre, les informations échangées, notamment du serveur au terminal 1, peuvent être chiffrées pour améliorer la sécurité des échanges, notamment lors de la transmission du signal imposé.

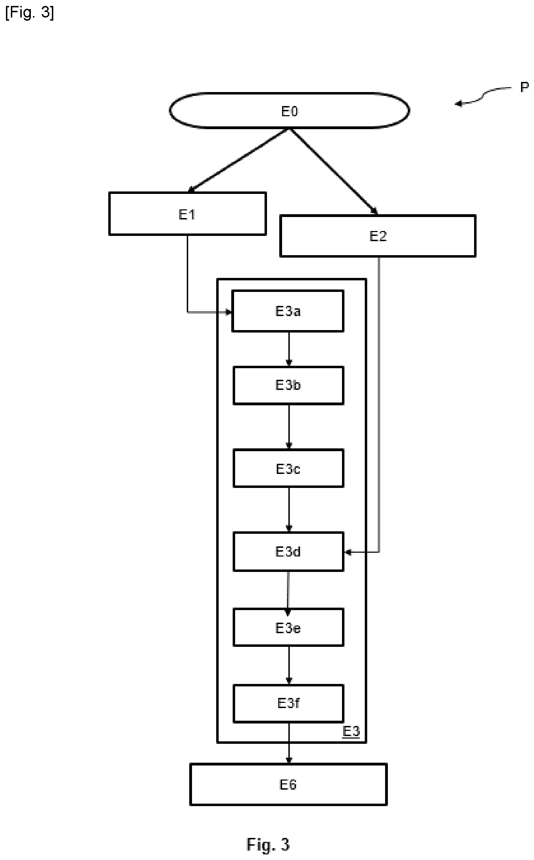

En référence à la figure 3, l'utilisateur du terminal 1 utilise un dispositif selon l'invention pour s'authentifier sur un compte en ligne via une application. Un procédé biométrique d'authentification du visage présenté à la caméra est alors initié, invitant l'utilisateur à présenter son visage 2 dans le champ d'acquisition 4 de la caméra 3. Avant de générer le gabarit biométrique et d'accéder au gabarit enrôlé de l'utilisateur pour le comparer, le procédé biométrique d'authentification appelle le procédé P de sécurisation d'accès distant afin de détecter des tentatives de fraude lors de l'accès au compte en ligne.

A l'appel, par le procédé biométrique d'authentification du visage, du procédé P de sécurisation, l'unité de traitement de l'information 106 du dispositif met en œuvre l'étape d'initialisation E0 du procédé P de sécurisation correspondant notamment à la vérification du fonctionnement de la caméra 3 du terminal 1 du dispositif.

Le procédé P de sécurisation se poursuit alors par la mise en œuvre, par l'unité de traitement de l'information 106, des instructions de :

- détermination des paramètres invariants (non représenté) par tirage aléatoire de valeur du ou des paramètres invariants, c'est-à-dire de la ou les fréquences fondamentales du signal imposé et/ou du déphasage entre deux composantes du signal imposé ;
- acquisition E1 d'un signal temporel vidéo par la caméra 3, dont l'orientation vers le visage de l'utilisateur a été sollicitée auprès de l'utilisateur ;
- pilotage E2, pendant tout ou partie de l'étape d'acquisition, de la source lumineuse, ici l'écran 5, selon le signal émis temporellement variable imposé par affichage sur plus de la moitié de l'écran 5 de couleur variant selon le signal temporellement variable imposé ;
- La première série d'images résulte dans le mode de réalisation décrit ici d'une sélection d'images acquises en fonction de critères de qualité (netteté) et en ce que ces images comprennent un visage (région d'intérêt) - ce qui est notamment apprécié au regard de la distance inter-yeux qui doit préférentiellement s'étendre sur plus de 50 pixels. Cette sélection résulte donc d'une analyse d'image notamment mise en œuvre au moyen d'un réseau de neurones. En outre, on notera que la première série d'images peut ne comporter que des images d'une fenêtre temporelle de la période d'acquisition E1 par la caméra 3, préférentiellement la durée de ladite fenêtre temporelle est supérieure ou égale à deux fois la période maximale du ou des signaux imposés (en prenant en compte les différentes composantes imposées) avec une fréquence d'échantillonnage supérieure ou égale à deux fois la fréquence maximale du ou des signaux imposés (en prenant en compte les différentes composantes imposées);
- évaluation E3, à partir d'une première série d'images du signal temporel acquis, d'une présence de fraude par injection ou encore de présentation (sur écran ou par présentation de photo imprimée par exemple) par :

- estimation E3d d'une contribution du signal émis imposé au signal temporel vidéo acquis en fonction des paramètres invariants ;
- évaluation E3e d'un niveau de bruit du signal temporel vidéo acquis ;
- comparaison E3f de la contribution par rapport au niveau de bruit par calcul d'un rapport signal sur bruit par division de la contribution par le niveau de bruit.

Autorisation E6 de poursuite de l'accès à la source de données en fonction du rapport signal sur bruit calculé. Dans le cas contraire, le procédé biométrique d'authentification est interrompu et un message d'erreur peut être affiché sur l'écran 5. Dans les deux cas le statut horodaté, de réussite (absence de fraude) ou d'échec (fraude détectée), est préférentiellement inscrit dans un registre local RAM ou dans un registre externe.

On note que les étapes d'estimation E3d d'une contribution et d'évaluation E3e d'un niveau de bruit peuvent être inversées ou réalisées simultanément.

Dans le mode de réalisation illustré et décrit en lien avec la figure 3, l'étape d'évaluation E3 est appliquée selon une discrétisation par zones d'intérêt, de manière à décrire ce mode de réalisation en détail, néanmoins ce mode de réalisation n'est pas exclusif ni limitatif, le procédé selon l'invention s'appliquant également de manière globale sur une zone unique que serait par exemple la région d'intérêt, correspondant à la zone de chaque image de la première série imageant le visage de l'utilisateur.

Dans ce mode de réalisation la sélection d'images peut également être affinée de manière à ce que ne fassent partie de cette première série d'images que les images comportant toutes les zones d'intérêt, et dans ce cas les étapes E3a d'alignement et E3b de détermination des zones d'intérêt sont effectuées en amont de la sélection d'images et de l'étape d'évaluation E3 de présence de fraude à partir de la première série d'images du signal temporel acquis. Il convient de noter qu'il serait également possible de définir autant de première série d'images que de zone d'intérêt . En effet, si pendant l'acquisition E1 la personne bouge montrant un profil puis l'autre, il est possible de déterminer une première série d'images pour une zone d'intérêt propre à une aile du nez et une autre première série d'images (distinctes des images précédentes) pour une zone d'intérêt propre à l'autre aile du nez alors que pour une zone d'intérêt propre au front par exemple la première série d'images utilisée pourra comporter toutes les images de ces deux premières séries d'images. Dans le mode de mise en œuvre illustré ici, seuls les critères de qualité et de présence de visage (avec distance inter-yeux supérieure à 50 pixels) dans l'image sont appliqués, ce qui signifie que toutes les images de la première série contiennent ici toutes les zones d'intérêt, pour des raisons de simplification.

L'étape d'évaluation E3 , à partir de la première série d'images du signal temporel acquis, d'une présence de fraude par injection, ou présentation, comporte :

- pour chaque image de la première série, alignement E3a spatial desdites images par rapport à un point de référence du visage détecté, par exemple par recalage des yeux ; cette étape optionnelle d'alignement permet ensuite de travailler dans un référentiel fixe et sans effet d'homothétie dans le temps même si la personne se rapproche; Il convient également de noter qu'en variante tout ou partie des pré-traitements décrits précédemment peuvent être mis en œuvre conjointement à cette étape d'alignement.
- détermination E3b d'au moins deux zones d'intérêt dans le visage détecté, chaque zone d'intérêt étant commune aux images de la première série;
- détermination E3c d'un signal temporel observé par zone d'intérêt, représentatif des valeurs de pixels des images de la première série d'images ; ici le résultat est exprimé sous forme d'un vecteur de vecteurs de signaux, appelé aussi matrice, chaque colonne correspondant à une composante (bleue et rouge) et chaque ligne à une zone d'intérêt, chaque élément de la matrice comprenant le vecteur signal temporel observé de la zone d'intérêt correspondante moyenné spatialement sur les pixels de ladite zone d'intérêt;
- estimation E3d, par zone d'intérêt, d'une contribution du signal émis imposé au signal temporel observé en fonction des deux paramètres invariants, dont la nature et la valeur sont connus, la contribution par zone d'intérêt étant ici, non limitativement, exprimée sous forme d'une énergie de manière à manipuler une estimation de contribution sous forme vectorielle non temporelle ; en variante elle aurait pu rester sous forme de vecteur de signaux ou encore s'écrire sous forme d'une unique valeur, les contributions des différentes zones étant par exemple moyennées (avec ou sans application de pondérations),
- évaluation E3e d'un niveau de bruit du signal temporel vidéo acquis par détermination, par zone d'intérêt, par calcul d'une énergie d'un signal résiduel correspondant à une soustraction d'une moyenne temporelle du signal temporel vidéo acquis audit signal temporel vidéo acquis d'un signal ; ce calcul de l'énergie d'un signal résiduel est ici effectué indirectement par application d'un filtre passe bande couvrant la plage [0.5-3 Hz], puis calcul d'une énergie dudit signal résultant et soustraction à ladite énergie calculée de ladite contribution de la zone déjà exprimée sous forme d'une énergie, ce qui fournit l'énergie dudit signal résiduel correspondant au niveau de bruit, ici également exprimé sous forme de vecteur d'énergie ;

- calcul E3f d'un rapport signal sur bruit par division de la contribution par le niveau de bruit, un vecteur est alors obtenu comportant une valeur pour chaque ligne correspondant à chaque zone d'intérêt ; il est à noter que ses valeurs pourraient être moyennées (avec ou sans pondération) à cette étape ou la suivante pour qu'il ne résulte qu'une seule valeur à seuiller à l'étape suivante ;

- autorisation (E6) de poursuite de l'accès à la source de données en fonction du rapport signal sur bruit calculé ici sous forme de vecteur, une comparaison est alors réalisée soit à un seuil unique global si une seule valeur a été obtenue à l'issue du calcul du rapport signal sur bruit à l'étape précédente, soit par zone d'intérêt, les seuils n'étant pas nécessairement identiques, ce qui permet d'affecter une sensibilité par zone (comparable à une pondération qui aurait été prise en compte par zone) et la somme des valeurs binaires obtenues par ligne, c'est-à-dire par zone d'intérêt, du vecteur doit dépasser un autre seuil pour autoriser la poursuite d'accès.

Le mode de réalisation illustré est décrit de manière plus détaillée dans les paragraphes suivants.

La détermination des paramètres invariants (non représenté) par tirage aléatoire de valeur du ou des paramètres invariants, correspond ici au tirage aléatoire de la fréquence fondamentale du signal imposé, identique pour les deux composantes bleu et rouge et du déphasage entre la composante bleue et la composante rouge du signal imposé, se traduisant donc par le tirage une première valeur entre 0.5 et 3 pour le premier paramètre invariant (fréquence fondamentale imposée) et tirage aléatoire d'une deuxième valeur entre 0 et $2\pi$ pour le second paramètre invariant (déphasage entre les deux composantes dont au moins un paramètre est invariant temporellement et de valeur fixée aléatoirement : bleu et rouge, car la composante verte est dans le mode de réalisation décrit ici non variable dans le temps mais fixe ). Le tirage aléatoire est ici mis en œuvre par le serveur distant.

Le tirage décrit ici est aléatoire, néanmoins en variante il peut être pseudo aléatoire, notamment de manière à ne pas reproduire le même défi sur le même terminal et/ou pour la même personne. Pour ce faire, les paramètres invariants appliqués sont enregistrés dans une mémoire, préférentiellement côté serveur distant, en association avec l'identifiant de chaque terminal (par exemple IMEI d'un téléphone mobile) et/ou l'identifiant (préférentiellement anonymisé) de chaque visage éclairé pour lequel le procédé a été appliqué, créant ainsi un registre des exclusions pour les prochains tirages. Préférentiellement ce registre des exclusions correspond au registre externe du statut horodaté, de réussite (absence de fraude) ou d'échec (fraude détectée) du procédé de sécurisation. L'identifiant du terminal (par exemple IMEI d'un téléphone mobile) est par exemple communiqué au serveur distant en tant que metadata lors de chaque connexion au serveur distant. L'identifiant (préférentiellement anonymisé) biométrique du visage éclairé est par exemple créé et mémorisé, préférentiellement par le serveur distant, par chiffrement d'un gabarit biométrique obtenu sur la base des images acquises à l'étape E1. Ainsi, au prochain tirage de paramètre invariant pour le même terminal, le tirage est pseudo-aléatoire car il exclut les valeurs des paramètres déjà appliqués sur ce terminal et/ou pour ce visage utilisateur (par comparaison, appelé matching, en 1 contre n du gabarit biométrique courant avec ceux déjà enregistrés dans le registre des exclusions), préférentiellement c'est la combinaison du même utilisateur sur le même terminal qui est exclue. Ce mode de mise en œuvre permet notamment de maîtriser le cas d'un fraudeur qui utiliserait différents appareils, potentiellement virtuels. En outre, ce registre des exclusions est avantageusement monitoré de manière à surveiller des mises en œuvre du procédé anormales et à ce titre potentiellement frauduleuses. Pour ce faire les paramètres invariants appliqués étant enregistrés dans le registre avec leur statut horodaté : de réussite (absence de fraude) ou d'échec (fraude détectée), un nombre de tentatives échouées pour un même identifiant biométrique sur un temps donné remontent une alerte système.

Ce signal temporellement variable imposé est un signal périodique composé de deux composantes couleurs périodiques et constitue un défi, le ou les composantes périodiques du signal temporellement variable imposé pouvant être de type sinusoïdal, en créneau ou triangulaire, les deux composantes n'étant pas nécessairement du même type.

Si la périodicité du signal temporellement variable imposé peut être, comme ici, la même pour toutes ses composantes, elle peut aussi n'être due qu'à une unique composante du signal Rouge Vert Bleu d'affichage, à savoir la composante bleue, verte ou rouge : le signal temporellement variable piloté étant alors composé d'une seule composante couleur périodique, les autres conservant alors un niveau fixe pendant l'étape de pilotage, ce niveau pouvant néanmoins varier entre chaque mise en œuvre du procédé, ces niveaux fixes étant avantageusement fixés aléatoirement. Il est néanmoins préférable que le signal temporellement variable imposé soit composé de plusieurs composantes couleur, notamment périodiques, pour augmenter la diversité du défi, comme ici, et le choix des composantes rouge et bleue uniquement (non verte) permet de limiter la diaphonie des couleurs.

Par exemple les composantes rouge et bleue du signal temporellement variable imposé peuvent être en créneau et s'écrire tel que :

$$\begin{cases} rouge = \alpha_{rouge}\big(\text{signe}(\cos(2\pi f_{rouge}t)) + 1\big) \\ bleu = \alpha_{bleu}\big(\text{signe}(\cos(2\pi f_{bleu}t)) + 1\big) \end{cases}$$

, où les paramètres fixés aléatoirement sont :

- les fréquences $f_{rouge}$ et $f_{bleu}$ dans la plage de travail [0.5Hz, 3Hz],

Les autres paramètres sont fixés non aléatoirement, ainsi le déphasage entre les deux composantes est ici fixé à 0. De même, les niveaux $a_{rouge}$ et $a_{bleu}$ dans la plage sont fixés non aléatoirement (aucun tirage aléatoire) dans la plage [ 0, 255], préférentiellement à 127,5, ces amplitudes correspondent à des paramètres non estimables dans le signal observé (réponse de l'objet capturé à l'éclairage tel que piloté). Les niveaux d'amplitudes ne constituent donc pas des paramètres invariants fixés aléatoirement.

De même, la composante verte a un niveau $a_{vert}$ fixé (non aléatoirement) dans la plage [ 0, 255], préférentiellement 255, mais ce niveau ne constitue pas un paramètre invariant fixés aléatoirement d'autant que la composante verte n'est pas variable temporellement. Préférentiellement, les composantes rouge et bleue du signal temporellement variable imposé peuvent être sinusoïdales et s'écrire tel que :

$$\begin{cases} rouge = \alpha_{rouge}\big(\cos(2\pi f_{rouge}t) + 1\big) \\ bleu = \alpha_{bleu}(\cos(2\pi f_{bleu}t) + 1) \end{cases},$$

où les paramètres fixés aléatoirement sont :

- les fréquences $f_{rouge}$ et $f_{bleu}$ dans la plage [0.5Hz, 3Hz] ;

Les autres paramètres sont fixés non aléatoirement, ainsi le déphasage entre les deux composantes est ici fixé à 0. Par ailleurs, les niveaux $a_{rouge}$ et $a_{bleu}$ sont fixés dans la plage [ 0, 255 ], préférentiellement 127,5, comme précédemment, la composante verte ayant alors un niveau $a_{vert}$ fixé dans la plage [ 0, 255], préférentiellement 255, comme précédemment.

Dans le mode illustré dans le mode de réalisation propre à cette figure, les composantes rouge et bleue du signal temporellement variable imposé sont périodiques sinusoïdales et déphasées entre elles et s'écrivent tel que :

$$\begin{cases} rouge = \alpha_{rouge}\big(\cos(2\pi f_{rouge}t) + 1\big) \\ bleu = \alpha_{bleu}\big(\cos(2\pi k_{bleu}f_{rouge}t + \phi_{bleu}) + 1\big) \end{cases},$$

où les paramètres fixés aléatoirement sont :

- la fréquence $f_{rouge}$ dans la plage [0.5Hz, 3/$k_{bleu}$Hz] de manière à avoir les fréquences des deux composantes dans l'intervalle préférentiel,
  et
- la phase $\phi_{bleu}$ dans la plage [ 0, 2$\pi$ ], ce qui correspond au déphasage entre la composante bleue et la composante rouge du signal imposé.

Par ailleurs les autres paramètres sont fixés non aléatoirement:

- les niveaux $a_{rouge}$ et $a_{bleu}$ sont fixés dans la plage [ 0, 255 ], préférentiellement 127,5, comme précédemment, la composante verte ayant alors un niveau $a_{vert}$ fixé dans la plage [ 0, 255], préférentiellement 255, comme précédemment ;
- et un entier naturel $k_{bleu}$ dans la plage [ 1, 6 ], est ici fixé à 1. Ainsi, les fréquences des deux composantes sont choisies égales (multiple = 1), ce qui permet d'isoler une unique fréquence lors d'étape E3d d'estimation de la contribution, quelle que soit la composante étudiée.

Les fréquences fondamentales supérieures à 3 Hz sont préférentiellement évitées, à la fois pour des raisons de bien-être de l'utilisateur et pour des raisons d'échantillonnage de manière à pouvoir traiter une séquence vidéo dès lors que sa fréquence d'échantillonnage est d'au moins 6 Hz (critère de Shannon). Néanmoins, il convient de noter que les téléphones portables comportent des caméras classiquement aptes à effectuer des vidéos à au moins 25 Hz localement (sans diffusion externe (streaming, en anglais)) pour des résolutions hautes densités donc la valeur maximale de cette plage peut être augmentée, notamment si l'information biométrique acquise n'est pas un visage mais un dermatoglyphe par exemple car le confort utilisateur ne serait alors pas impacté.

Le pilotage E2 de l'affichage sur une partie de l'écran 5 de couleur variant selon un signal temporellement variable sinusoïdal de fréquence fondamentale imposée et de déphasage entre la composante bleue et la composante rouge imposé, fréquence fondamentale et déphasage ayant été fixés aléatoirement, permet de faire varier la couleur dans la partie de l'écran 5 périodiquement et sans qu'il soit répétable car il dépend de deux paramètres tirés aléatoirement et indépendamment. Ici, la composante rouge et la composante bleue sont des signaux périodiques de fréquence fondamentale égale à la première valeur tirée aléatoirement et présentant entre elles un déphasage égal à la deuxième valeur tirée aléatoirement, la composante verte étant invariante temporellement (et initialisée par exemple au niveau 255), ledit signal imposé codant ainsi deux paramètres invariants qui sont ici (non limitativement) des paramètres du spectre: fréquence fondamentale du signal imposé et déphasage entre les deux composantes temporellement variables du signal imposé. Le pilotage E2 de l'affichage est ici réalisé par le terminal utilisateur 1 selon des valeurs de consigne à appliquer par composante envoyées en temps réel par le serveur distant, les sinusoïdes rouge et bleu temporellement variables étant calculées par le serveur distant sur la base des tirages aléatoires qu'il a effectués, mais non transmises en tant que telles de manière à garder le terminal utilisateur agnostique des paramètres invariants. Avantageusement une étape de prétraitement (non illustré) est ici appliquée entre l'étape d'acquisition E1 et la sélection de la première série d'images, notamment au moyen d'un réseau de neurones de prétraitement. Cette étape a essentiellement pour but une normalisation avant la détection du visage, pour déterminer la zone d'intérêt, mais peut également comporter des traitements sur les couleurs, pour faire abstraction de changements de luminance, avant l'estimation E3d de la contribution. Le réseau de neurones peut être configuré pour agir sur des artefacts de compression d'image et/ou sur la netteté de l'image. Le réseau neuronal peut encore être configuré pour appliquer une transformation colorimétrique aux images de départ. Plus généralement, le prétraitement d'image qui est réalisé peut consister en un ou plusieurs des opérateurs de traitements d'images suivants :

- opérateurs de modification pixel à pixel (ou point à point). Il s'agit par exemple de la correction de couleur, de teinte, de gamma;
- opérateurs locaux, notamment ceux pour la gestion du flou local ou du contraste, un opérateur local s'appuyant sur un voisinage du pixel, c'est-à-dire plus qu'un pixel mais moins que toute l'image ; un opérateur local permet, à partir d'un voisinage d'un pixel d'entrée, d'obtenir un pixel de sortie ;
- opérateurs dans l'espace fréquentiel (après transformée de l'image). Le fait de faire intervenir un ou plusieurs opérateurs dans l'espace fréquentiel ouvre la voie à diverses possibilités de réduction de bruit analogique ou numérique, telles que réduction des artefacts de compression, amélioration de la netteté de l'image, du piqué ou du contraste.

Pour la mise en œuvre de l'étape d'évaluation E3 et notamment la sélection des images de la première série d'images, une étape (non représentée) de détection du visage dans tout ou partie (après filtrage des images de mauvaise qualité par exemple) des images acquises est ici mise en œuvre. La détection du visage comprend la détermination d'une région d'intérêt dans une image correspondant à la localisation du visage dans ladite image. La région d'intérêt est typiquement une zone rectangulaire (ou boîte) englobant le visage afin d'isoler le visage de son environnement apparaissant dans l'arrière-plan de l'image. D'autres types de régions d'intérêt peuvent être utilisée. La région d'intérêt peut par exemple être définie par un contour entre la peau et l'arrière-plan, délimitant le visage par rapport à son arrière-plan.

La région d'intérêt peut être détectée au moyen de plusieurs approches. Une approche est par exemple d'analyser l'image pour en détecter des particularités physiques telles que les yeux. Dans la mesure où les visages sont constitués d'éléments similaires (yeux, nez, bouches, etc.) spatialement organisés de manière similaire, la détection de ces éléments est facilitée. Une autre approche est par exemple d'utiliser un modèle de calcul tel qu'un réseau de neurone, une machine à vecteur de support ou un arbre de décision, préalablement entraîné par sur une base d'apprentissage d'images présentant des visages variés.

Cette étape de détection du visage peut être mise en œuvre par l'unité de traitement de l'information 106 sur les images acquises et transmises par la caméra 3. Il est également possible que cette étape de détection du visage soit mise en œuvre par un autre élément que l'unité de traitement de l'information 106, comme par exemple la caméra 3, et que l'unité de traitement de l'information 106 ne reçoive que les régions d'intérêt plutôt que les images complètes.

De manière non limitative, l'étape E3a d'alignement, qui est optionnelle, peut consister en la détermination, avec la même méthode que décrite dans le paragraphe précédent, dans chaque image d'élément caractéristique d'un visage (yeux, nez, bouches, etc.) pour ensuite les aligner les uns sur les autres d'une image à l'autre. Préférentiellement les yeux sont choisis comme références d'alignement car leur alignement permet en même temps de réaliser une normalisation et de figer l'orientation du repère des images entre elles, sachant que le réseau de neurones utilisé pour la détection des deux yeux est préférentiellement entraîné de manière à détecter deux yeux appartenant au même visage et notamment en discriminant œil droit - œil gauche de manière à orienter de manière unique les images ;En variante, non limitative, un alignement nez-bouche est également envisageable mais moins qualitatif.

A l'étape de détermination E3b des au moins deux zones d'intérêt, les zones d'intérêt sont préférentiellement géométriquement définies parmi : un triangle d'un maillage du visage détecté ou un pixel au voisinage d'un point d'intérêt du visage détecté, chaque zone d'intérêt étant présente dans toutes les images de la première série. Un tel point d'intérêt est par exemple un point sémantique du visage, tel que l'extrémité du nez, le coin de l'œil (position parfois estimée), tel qu'enseigné par Guo, X., Li, S., Yu, J., Zhang, J., Ma, J., Ma, L., & Ling, H. (2019). PFLD: A practical facial landmark detector. arXiv preprint arXiv:1902.10859. Préférentiellement, chaque zone d'intérêt est une zone du visage de forme particulièrement remarquable et où il y a le moins de déformation et/ou offuscation possible de manière à réduire le bruit de mesure lors de l'acquisition notamment. Ainsi les zones du dorsum et la pointe du nez sont particulièrement intéressantes, mais pas exclusivement.

L'étape de détermination E3c d'un signal temporel observé par zone d'intérêt , représentatif des valeurs de pixels des images de la première série d'images, n'est donc ici basée que sur une partie du visage détecté, notamment sur les zones de peau, en utilisant pas exemple la méthode de segmentation décrite dans le document Wang, B., Chang, X., & Liu, C. (2011). Skin detection and segmentation of human face in color images, International Journal of Intelligent Engineering and Systems, 4(1), 10-17. Ce choix permet d'éviter les biais liés aux lunettes par exemple. Pour chaque image de la première série, un calcul de la moyenne des niveaux permet de constituer un signal temporel observé pour ladite zone d'intérêt par composante.

L'étape d'estimation E3d, par zone d'intérêt, d'une contribution du signal émis imposé au signal temporel observé en fonction des deux paramètres invariants est réalisée par composante. L'estimation de la contribution est ici mise en œuvre pour la fréquence fondamentale par filtrage temporel passe-bande .Pour ce faire et de manière non imitative, un filtre passe bande étroit (au dixième de Hertz) centré sur la fréquence fondamentale imposée ($f_{rouge}$ connue) est appliqué au signal observé, puis l'énergie de la réponse filtrée obtenue est la contribution du signal émis imposé au signal temporel observé pour la composante et la zone d'intérêt concernée. Le choix d'un filtre passe bande de forme un peu plus large que la seule fréquence fondamentale du signal imposé permet d'absorber d'éventuelles distorsions du signal en couvrant un spectre fréquentiel un peu plus large. En alternative au filtrage temporel passe bande, une sélection du terme de la décomposition selon la transformation de Fourier rapide (FFT) du signal temporel vidéo acquis correspondant à la fréquence fondamentale imposée (connue) est appliquée, ce qui constitue l'estimation, déjà sous forme d'une énergie, de la contribution du signal émis imposé au signal temporel observé pour la composante et la zone d'intérêt concernée.

Une autre variante consiste en une corrélation de chaque composante du signal observé avec une sinusoïde complexe de la fréquence fondamentale imposée ($f_{rouge}$), c'est-à-dire, indépendamment pour chaque composante, par mise du signal imposé sous forme exponentielle complexe, ce qui donne un vecteur r appelé imposé (avec par exemple: $r_k = \exp(i2\pi f t_k)$) et un vecteur s appelé observé, puis le calcul du produit scalaire de ces deux vecteurs est divisé ensuite par la norme du vecteur imposé et la valeur obtenue constitue la contribution c du signal émis imposé au signal temporel observé

$$c(f) = \frac{r.s}{\|r\|\|s\|}$$

pour la composante et la zone d'intérêt concernée, ce qui peut s'écrire : .

En effet, suivant le type d'invariant, la méthode pour estimer la contribution du signal émis imposé au signal temporel observé, c'est-à-dire pour isoler dans le signal temporel observé la partie qui correspond à la valeur de paramètre invariant connu, diffère :

- par exemple dans le cas d'un invariant en fréquence uniquement, on isole avantageusement par la fréquence tel que décrit ci-avant, c'est-à-dire au moyen d'un filtrage fréquentiel, sélection d'un terme de FFT ou par corrélation par sinusoïde complexe ;
- par exemple dans le cas d'un invariant en déphasage entre les composantes (pour une fréquence identique des deux composantes), on estime avantageusement la contribution par corrélation avec les sinusoïdes complexes déphasées, selon la même méthode que décrite précédemment en écrivant $r_k$:

$$r_k^{rouge} = \exp\left(i2\pi f_{rouge} t_k\right), \; r_k^{bleu} = \exp\left(i(2\pi f_{bleu} t_k - \phi_{bleu})\right)$$

, pour chaque composante, puis par exemple on somme ces contributions, pour enfin calculer le module de cette somme, qui en cas d'absence de fraude sera élevé (ou en variante on peut par exemple normaliser ces vecteurs puis les soustraire et calculer le module de leur différence, qui en cas d'absence de fraude sera presque nul ou nul).

L'évaluation E3e d'un niveau de bruit du signal temporel vidéo acquis par détermination, par zone d'intérêt, est ici effectué indirectement par application d'un filtre passe bande couvrant la plage de travail [0.5-3 Hz], puis calcul d'une énergie dudit signal résultant et soustraction à ladite énergie calculée de ladite contribution de la zone déjà exprimée sous forme d'une énergie, ce qui fournit l'énergie dudit signal résiduel correspondant au niveau de bruit, ici également exprimé sous forme de vecteur d'énergie avec une ligne par zone d'intérêt et une colonne par composante bleue, rouge .

L'étape E3f de comparaison de la contribution par rapport au niveau de bruit comporte ici un calcul d'un rapport signal sur bruit par division de la contribution par le niveau de bruit.

Dans le mode de mise en œuvre par zone d'intérêt, illustré ici, un calcul de moyenne, notamment pondérée par zone d'intérêt, ou de médiane desdites zones d'intérêt de manière à ce que le rapport signal sur bruit calculé soit global peut notamment être réalisé dès l'étape d'estimation E3d de contribution et poursuivi à l'étape d'évaluation E3e d'un niveau de bruit du signal temporel vidéo acquis ; ou lors de l'étape de calcul E3f d'un rapport signal sur bruit. Dans le mode de mise en œuvre décrit ici, un calcul de moyenne pondérée est préférentiellement mis en œuvre à l'étape de calcul E3f du rapport signal sur bruit à partir du niveau de bruit et de la contribution sous forme matricielles. Le choix, optionnel, d'utiliser une moyenne pondérée permet de ne pas affecter la même sensibilité à toutes les zones d'intérêt. Ce choix a d'autant plus de sens que les zones couvrent une grande partie de la région d'intérêt, à savoir du visage dans les images de la première série d'images, et cela permet notamment d'affecter une pondération plus élevée pour une zone d'intérêt couvrant la zone imagée des yeux, notamment des lunettes dans l'image, puisque les lunettes impliquent un fort signal de retour avec faible bruit. L'attribution de ce poids supérieur peut par exemple n'être appliqué qu'en cas de détection de lunettes dans les images de la première série d'images (notamment par utilisation d'un réseau de neurones). De manière non limitative, deux modes de pondération sont décrits ici.

Un premier mode de pondération repose sur une qualification empirique des zones d'intérêt en fonction de critère de stabilité notamment. Par exemple, dans le cas d'un maillage du visage composé de triangles, chaque triangle correspondant à une zone d'intérêt, à chaque triangle est affecté une valeur de pondération, et une valeur moindre est affectée à la ou les zones d'intérêt chevauchant ce qui a été reconnu dans l'image comme une bouche, car une bouche est susceptible d'être perturbée par des mouvements.

Un autre mode de pondération repose sur les contributions spatiales. Il s'agit d'estimer des normales à la surface de l'objet acquis (par exemple d'après la publication de Fu, Z., Hong, S., Liu, M., Laga, H., Bennamoun, M., Boussaid, F., & Guo, Y. (2023). Multi-stage information diffusion for joint depth and surface normal estimation. Pattern recognition, 141, 109660. ) pour chaque zone d'intérêt ou pour chaque pixel du visage. Puis de calculer une répartition spatiale attendue (basée sur le postulat que le visage de l'utilisateur est imagé de face), pour chaque zone d'intérêt ou pour chaque pixel du visage (carte), en fonction de la distance objet-éclairage et de l'orientation de la normale par rapport à l'axe objet-éclairage, qui peut être approximé par une distance constante et normale suivant l'axe z de la caméra, et avec un modèle d'éclairage simplifié (lambertien) si bien que la contribution spatiale attendue = nz(x,y) avec nz la composante en z de la normale puis on utilise cette contribution spatiale attendue comme pondération

Avantageusement, une unique valeur globale de rapport signal sur bruit (moyennées pour toutes les zones d'intérêt et pour les deux composantes) est alors obtenue par division de :

- la contribution sous forme matricielle une fois moyennée avec lesdites pondérations par
- le niveau de bruit sous forme matricielle une fois moyenné avec lesdites pondérations.

La poursuite de l'accès à la source de données est alors autorisée E6 si le rapport signal sur bruit précédemment obtenu est supérieur à un seuil donné, choisi préférentiellement élevé, ce qui permet de ne passer d'autoriser l'accès que dans les cas où la fréquence dominante est celle du défi, alors qu'un seuil faible, permet d'accepter y compris des cas où la fréquence du défi n'est pas dominante, tant qu'elle est suffisamment représentée. En pratique un seuil à 0,4 est choisi pour fonctionner avec un éclairage ambiant fort par rapport à l'éclairage de l'écran 5.

En variante, en cas d'invariant fréquentiel, l'évaluation E3, à partir d'une première série d'images du signal temporel acquis, d'une présence de fraude par injection, ou présentation, par :

- estimation E3d d'une contribution du signal émis imposé au signal temporel vidéo acquis en fonction dudit paramètre invariant par détermination du taux de corrélation pour la fréquence imposée (notamment par composante concernée)
- évaluation E3e d'un niveau de bruit du signal temporel vidéo acquis par détermination du taux de corrélation pour chacune des autres fréquences ;
- comparaison E3f de la contribution par rapport au niveau de bruit par détermination du rang du taux de corrélation pour la fréquence imposée.

De manière non limitative, cette variante peut être réalisée de la manière suivante : pour tout ou partie de la plage de fréquence de travail on choisit un pas d'échantillonnage des fréquences (de 0.01 Hz par exemple), et pour chaque fréquence dans l'intervalle d'échantillonnage on détermine la ressemblance d'un signal type à cette fréquence fondamentale avec le signal reçu. Dit autrement, une discrétisation est réalisée : on corrèle le signal temporel vidéo acquis, par composante périodique, avec la sinusoïde de fréquence représentative (par exemple la fréquence moyenne) de chaque intervalle d'échantillonnage, ce qui permet d'obtenir un taux de corrélation (ici sous forme de vecteur) avec chaque intervalle de fréquence d'échantillonnage, c'est-à-dire un taux de ressemblance entre la sinusoïde du signal temporel vidéo acquis et la sinusoïde représentative de l'échantillon, cette étape correspond alors :

- pour l'intervalle d'échantillonnage comprenant la fréquence imposée à l'estimation E3d de la contribution du signal émis imposé au signal temporel vidéo acquis en fonction des paramètres invariants (ce qui constitue une alternative intéressante à la FFT, pour éviter d'être dépendant de la longueur du signal, du nombre d'images acquises et de choisir la finesse du pas) ;
- pour les autres intervalles d'échantillonnage à l'évaluation E3e du niveau de bruit du signal temporel vidéo acquis, car l'ensemble des taux de corrélation obtenus à l'exception de celui correspondant à celui de la fréquence imposée (émise) correspondent au bruit.

Puis sur la base de ces taux de corrélation on classe ou on attribue à chaque intervalle d'échantillonnage un rang croissant en allant du taux de corrélation le plus élevée au taux de corrélation le plus faible, avantageusement le rang est normalisé par le nombre d'intervalles.

La comparaison E3f de la contribution par rapport au niveau de bruit consiste alors en la détermination du rang propre à l'intervalle d'échantillonnage comprenant la fréquence imposée, pour chaque composante.

Enfin, l'autorisation E6 de poursuite de l'accès à la source de données en fonction du résultat de la comparaison consiste par exemple en une comparaison du rang propre à l'intervalle d'échantillonnage comprenant la fréquence imposée à un rang seuil. Ainsi, si le rang propre est inférieur au rang seuil (par exemple 0.03 en cas de rang normalisé), on autorise la poursuite de l'accès à la source de données. En cas de multiples composantes imposées variables temporellement, on peut avantageusement déterminer un rang global par combinaison (par exemple sous forme d'un produit ou d'une moyenne des rangs propres à chaque composante) des rangs propres déterminés à l'étape E3f par composante, avant de seuiller le rang global obtenu, par exemple à 0.001.

**En variante,** le procédé selon l'invention pourrait s'appliquer à la capture de dermatoglyphe, en utilisant préférentiellement pour l'acquisition E1 la caméra principale du terminal (arrière d'un « smartphone », ou tablette par exemple) : de meilleure résolution et en faisant par exemple clignoter le flash selon le signal temporellement variable de fréquence fondamentale imposée et de phase imposée.

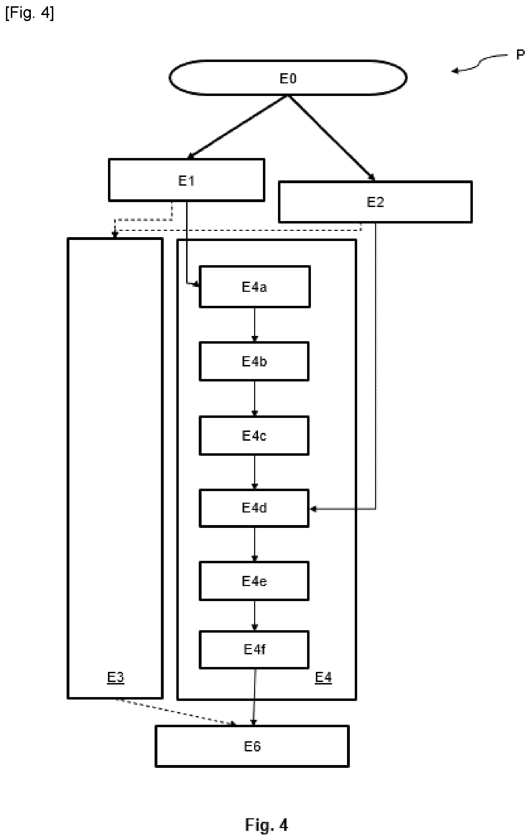

En référence à la figure 4, le procédé de sécurisation comporte une vérification complémentaire par évaluation E4 , à partir d'une deuxième série d'images de l'acquisition, de la présence de fraude par présentation par :

- (optionnel) pour chaque image de la deuxième série, alignement E4a spatial desdites images par rapport à un point de référence du visage détecté, par exemple par recalage des yeux, (ou reprise des résultats de l'étape E3a d'alignement si cette étape a été effectuée) ;

- détermination E4b d'au moins deux surfaces caractéristiques, dans chaque image de la deuxième série, chaque surface caractéristique étant commune aux images de la deuxième série,
- détermination E4c d'un signal temporel observé par surface caractéristique,
- estimation E4d, par surface caractéristique, d'une contribution du signal imposé au signal observé de manière à former un vecteur de retour,
- détermination E4e d'un score par application d'un classifieur audit vecteur, ledit classifieur étant notamment mis en œuvre par un réseau de neurones

et l'étape d'autorisation E6 de poursuite de l'accès à la source de données étant fonction du score déterminé.

L'évaluation E4, à partir d'une deuxième série d'images de l'acquisition, d'une fraude par présentation repose sur la vérification des propriétés de l'objet par analyse du signal acquis : c'est-à-dire reçu, signal qui correspond donc à la réponse de l'objet (supposé être le visage de l'utilisateur) à l'éclairage piloté. Cette vérification complémentaire ne nécessite pas d'estimation du paramètre du défi dans le signal acquis, ni de synchronisation particulière avec un évènement dédié pour identifier une séquence dédiée, il n'y a donc pas besoin d'analyser les images acquises une à une, ce qui laisse le procédé flexible et peu consommateur de mémoire. Finalement, si le score traduit une présence de fraude par présentation, l'accès à la source de données ne peut pas se poursuivre.

La deuxième série d'images ne comporte pas nécessairement toutes les images acquises à l'étape E1, comme précédemment, une sélection des images acquises pour former ladite deuxième série d'images peut reposer par exemple sur des critères de qualité ISO des images acquises, ou encore on pourrait ne conserver que les images acquises qui comportent l'intégralité du visage (par opposition à un visage dont une partie serait hors champ) , les mêmes critères de sélection des images de la première série d'images pouvant s'appliquer au choix des images de la deuxième série d'images, au regard des surfaces caractéristiques. De même ladite deuxième série peut ne comporter que des images d'une fenêtre temporelle de la période d'acquisition E1 par la caméra 3, préférentiellement ladite fenêtre temporelle a une durée supérieure ou égale à deux fois la période maximale du ou des signaux imposés (par composante) avec une fréquence d'échantillonnage supérieure ou égale à deux fois la fréquence maximale du ou des signaux imposés (par composante). La deuxième série d'images est ici la même que la première série d'images

Les surfaces caractéristiques appartiennent à la région d'intérêt imageant tout ou partie d'un visage et correspondent notamment aux surfaces sur lesquelles a été entraîné le classifieur. Ces surfaces caractéristiques multiples sont choisies de manière à pouvoir mettre en évidence les différences de réponse liées à la géométrie, à l'apparence de l'objet. Elles ne sont pas nécessairement identiques aux zones d'intérêt, ce qui peut limiter la réutilisation des résultats de l'étape E3b de détermination des zones d'intérêt néanmoins, ici les surfaces caractéristiques comprennent les zones d'intérêt du dorsum et de la pointe du nez en tant que surface à forte réponse, et d'autres surfaces caractéristiques correspondant à des surfaces à forte réponse sont ajoutées : telle que la surface imagée du front ou des lunettes et d'autres surfaces caractéristiques correspondant à des surfaces à faible réponse sont ajoutées : telle que la surface imagée des ailes narinaires ou du menton ou de la région péri-auriculaire.

L'étape d'estimation E4d, par surface caractéristique, d'une contribution du signal piloté au signal observé de manière à former un vecteur de retour est par exemple mis en œuvre par filtrage du signal observé à la fréquence fondamentale imposée et calcul de l'amplitude. En présence de plusieurs surfaces caractéristiques, les amplitudes obtenues par surface caractéristique sont alors assemblées ensemble sous forme d'un vecteur de retour, dit aussi d'apparence. Le vecteur de retour est alors par exemple formé d'autant de sous-vecteurs que de signaux temporellement variables imposés, ce qui permet de disposer en entrée du classifieur d'un vecteur de vecteurs (appelé aussi matrice, avec par exemple autant de colonnes que de signaux imposés (ici une colonne par composante couleur périodique : bleu et rouge) et autant de lignes que de surfaces caractéristiques). Ce vecteur de retour montre par exemple des réponses plus fortes au niveau des lunettes ou des yeux, et des variations suivant les parties du visage.

Les paramètres invariants (ici la fréquence fondamentale imposée $f_{rouge}$ et le déphasage $\phi_{bleu}$ entre la composante bleue et la composante rouge) sont connus de l'unité de traitement 106 mettant en œuvre l'étape d'estimation E4d.

Puis l'étape de détermination E4e d'un score comporte l'application d'un classifieur à ce vecteur, ledit classifieur étant notamment mis en œuvre par un réseau de neurones.

Préférentiellement, le classifieur est dit « profond » et constitué par apprentissage supervisé, préalablement entraîné à partir d'exemples de vrais visages et de fraudes sur écran ou papier.

Puis, l'étape de détermination E4f de la probabilité de fraude par présentation en fonction du score déterminé est mise en œuvre, en appliquant par exemple une fonction sigmoïde ou en utilisant une table.

Enfin, si la probabilité de fraude par présentation est inférieure à un deuxième seuil prédéterminé, cette condition étant préférentiellement concaténée à celle décrite à l'étape E6 en référence à la figure précédente, c'est-à-dire que les deux conditions doivent être respectées pour poursuivre , alors la poursuite du procédé biométrique d'authentification en vue de l'accès au compte est autorisée E6, et un statut accepté de la requête inscrit dans un registre lié au procédé de sécurisation alors que sinon le procédé biométrique d'authentification est interrompu et un statut refusé de la requête inscrit dans le registre lié au procédé de sécurisation.

Cette vérification complémentaire permet de discriminer une fraude sur écran, c'est-à-dire si un fraudeur positionne un écran sur lequel un enregistrement vidéo de l'utilisateur légitime est affiché ainsi, ou une fraude sur papier car alors le vecteur de retour ne correspondra pas à un vecteur de retour correct, par exemple parce que les réponses seront sensiblement identiques quelles que soient les zones, l'écran ou le papier présenté, par le fraudeur, face à la caméra 3 étant « plat ».

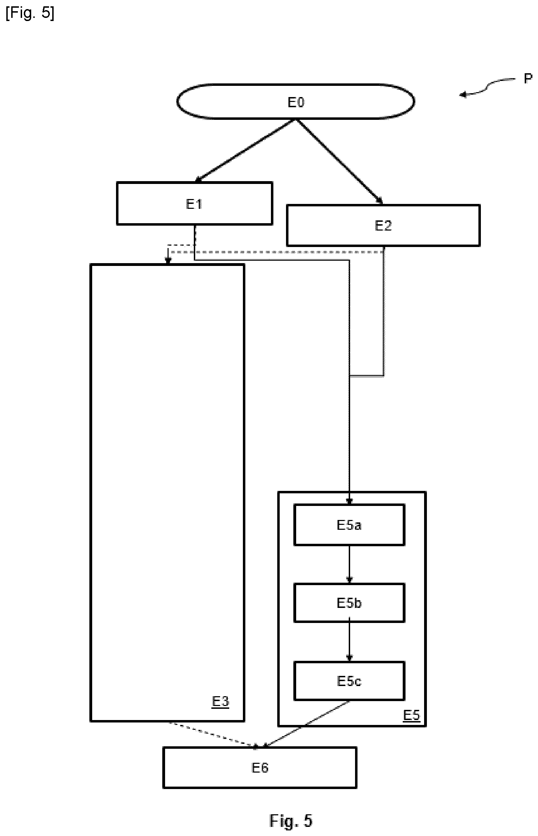

En référence à la figure 5, dans le cas de signal imposé périodique, le procédé de sécurisation comporte une vérification additionnelle améliorant encore la robustesse aux spécifiques par recapture ou injection par exemple, en ajoutant une étape d'évaluation E5, à partir de la troisième série d'images de l'acquisition, d'une présence de fraude spécifique par recapture ou injection par :

- détermination E5a d'une latence observée en fonction de la fréquence fondamentale du signal temporellement variable périodique imposé et d'un déphasage estimé entre le signal temporel périodique imposé et un signal temporel observé représentatif des valeurs de pixels des images de la troisième série d'images sur tout ou partie de la région d'intérêt détectée commune auxdites images de la troisième série d'images,
- calcul E5b d'une différence entre la latence observée et une latence de référence obtenue préalablement pour ledit terminal 1 ou pour un même modèle de terminal,

et l'autorisation E6 de poursuite de l'accès à la source de données étant fonction de la différence de latence calculée.

Plus précisément dans ce mode de mise en œuvre :

- la détermination E5a d'une latence observée est fonction de la fréquence fondamentale imposée, ici $f_{rouge}$, et d'un déphasage $\Phi$ estimé entre le signal temporel périodique imposé et ledit signal temporel observé représentatif des valeurs de pixels des images de la troisième série d'images sur tout ou partie du visage détecté commun auxdites images de la troisième série d'images. Sur la base de ces deux éléments, on en déduit alors un temps de réponse $t_{réponse}$ à une période près :

$$t_{réponse} = \frac{\Phi}{2\pi f_{rouge}} + \frac{n}{f_{rouge}}$$

avec n : entier naturel, mais égal à 0 par construction puisque, de par la plage de fréquence fondamentale imposée du signal imposé, en pratique la latence attendue est de l'ordre de 100ms, donc nettement plus faible que $1/f_{rouge}$, ce qui permet de calculer précisément la latence.

- calcul E5b d'une différence entre la latence observée $lat_{obs}$ et une latence de référence $lat_{ref}$ obtenue préalablement pour ledit terminal ou pour un même modèle de terminal. Pour obtenir cette latence de référence, on peut par exemple disposer d'une banque de latence par modèle de terminal, ou consulter la latence obtenue par les autres utilisateurs du même appareil, ou encore avoir mesuré ladite latence de référence lors de l'enrôlement du terminal 1, ce qui est le cas le plus simple mais nécessite que le terminal 1 n'ait pas changé entre temps ;

- détermination E5c de la probabilité spécifique de fraude par recapture ou injection en fonction de la différence de latence calculée, par exemple au moyen de la fonction $1- \dfrac{e^{\left(-\frac{\left(lat_{obs}-lat_{ref}\right)^2}{2\sigma^2}\right)}}{\sqrt{2\pi\sigma^2}}$ avec $\sigma$ un écart-type (par exemple ici de sensiblement 10ms), ce qui permet d'évaluer une vraisemblance de la latence observée si on suppose que la latence observée a une distribution gaussienne (loi normale) centrée sur la latence de référence avec un écart type de $\sigma$.

Enfin, si la probabilité spécifique de fraude par recapture ou injection est inférieure à un troisième seuil prédéterminé, cette condition étant donc concaténée à celle décrite à l'étape E6 en référence aux figures précédentes, alors la poursuite du procédé biométrique d'authentification en vue de l'accès au compte est autorisée E6, et un statut accepté de la requête inscrit dans un registre lié au procédé de sécurisation alors que sinon le procédé biométrique d'authentification est interrompu et un statut refusé de la requête inscrit dans le registre lié au procédé de sécurisation.

En variante, comme pour les étapes E4 et E3 l'étape intermédiaire de calcul de probabilité n'est pas limitatif, l'autorisation d'accès de l'étape E6 pouvant dépendre de l'infériorité de la différence de latences calculée à un seuil de sensiblement 10ms par exemple.

La série d'image utilisée ici est la première série d'images.

Cette étape additionnelle permet de vérifier la cohérence entre la latence observée et la latence de référence et ainsi de mieux identifier des fraudes expertes par recapture ou injection.

Préférentiellement, un paramètre d'acquisition, tel que la taille d'image de la caméra, est modifié pendant l'acquisition E1 et la probabilité spécifique de fraude par recapture ou injection est alors augmentée en absence de modification de la latence observée pendant l'acquisition, car cela signifier que le défi n'est pas vérifié puisque la modification de taille d'image fait nécessairement varier le délai de capture.

De manière non limitative, les premier, deuxième et troisième seuil sont par exemple fixés à 0,5.

De manière non limitative, sur les figures 3 à 5 l'étape d'acquisition E1 vidéo par la caméra 3 a été positionnée en amont de l'étape de pilotage E2, mais les deux peuvent être concomitantes, voire l'étape de pilotage E2 pourrait lancer l'acquisition E1 vidéo par la caméra 3.

**Revendications**

1. Procédé (P) de sécurisation d'accès distant à une source de données à partir d'un terminal (1) par un utilisateur dudit terminal, le terminal comportant une source lumineuse (5) et une caméra (3) orientées vers ledit utilisateur, ledit procédé comportant des étapes de :

   - acquisition (E1) d'un signal temporel vidéo par la caméra (3) ;
   - pilotage (E2), pendant l'étape d'acquisition, de la source lumineuse (5) selon un signal émis temporellement variable imposé périodique dont au moins un paramètre est invariant temporellement et de valeur fixée aléatoirement;
   - évaluation (E3) , à partir d'une première série d'images du signal temporel acquis, d'une présence de fraude par injection par :

      - estimation (E3d) d'une contribution du signal émis imposé au signal temporel vidéo acquis en fonction dudit paramètre
      - évaluation (E3e) d'un niveau de bruit du signal temporel vidéo acquis ;

- comparaison (E3f) de la contribution par rapport au niveau de bruit ;

- autorisation (E6) de poursuite de l'accès à la source de données en fonction du résultat de l'étape de comparaison.

**2.** Procédé selon la revendication précédente, dans lequel le signal émis temporellement variable imposé est une composante couleur périodique dont le paramètre invariant temporellement est une fréquence fondamentale.

**3.** Procédé selon l'une quelconque des revendications précédentes, dans lequel le signal émis temporellement variable imposé comporte au moins deux composantes couleur périodiques de même fréquence fondamentale ou multiples d'une même fréquence fondamentale, avec un déphasage entre lesdites au moins deux composantes, ledit au moins un paramètre invariant temporellement du signal imposé étant ladite fréquence fondamentale ou le déphasage.

**4.** Procédé selon l'une quelconque des revendications précédentes, dans lequel la fréquence fondamentale imposée est fixée aléatoirement dans une plage de travail entre 0,5Hz et 3Hz.

**5.** Procédé selon l'une quelconque des revendications précédentes, dans lequel le terminal comporte un écran d'affichage, la source lumineuse étant tout ou partie de l'écran (5) d'affichage du terminal (1) et le pilotage de la source lumineuse correspondant à un affichage sur tout ou partie de l'écran (5) de couleur variant selon le signal temporellement variable imposé.

**6.** Procédé selon l'une quelconque des revendications précédentes, dans lequel l'estimation (E3d) de la contribution comporte un filtrage temporel passe-bande ou une sélection de composante prédéterminée d'une transformation de Fourier rapide du signal temporel vidéo acquis, ou une corrélation avec le signal émis imposé.

**7.** Procédé selon l'une quelconque des revendications précédentes, dans lequel la contribution s'exprime sous forme d'une énergie, l'évaluation (E3e) du niveau de bruit du signal temporel vidéo acquis étant mise en œuvre par calcul d'une énergie d'un signal résiduel correspondant à une soustraction d'une moyenne temporelle du signal temporel vidéo acquis audit signal temporel vidéo acquis.

**8.** Procédé selon l'une quelconque des revendications précédentes, dans lequel l'étape (E3f) de comparaison de la contribution par rapport au niveau de bruit comporte un calcul d'un rapport signal sur bruit par division de la contribution par le niveau de bruit.

**9.** Procédé selon l'une quelconque des revendications précédentes, dans lequel à l'étape d'évaluation (E3), à partir d'une première série d'images du signal temporel acquis, d'une présence de fraude par injection:

- au moins une zone d'intérêt est déterminée (E3b), dans chaque image de la première série, ladite zone d'intérêt étant commune aux images de la première série,
- un signal temporel observé représentatif des valeurs de pixels des images de la première série d'images sur tout ou partie de la zone d'intérêt est déterminé (E3c) ;
- lors de l'estimation (E3d) ledit signal temporel de la première série d'images est ledit signal temporel observé déterminé par zone d'intérêt.

**10.** Procédé selon la revendication précédente, dans lequel l' étape de

- évaluation (E3e) d'un niveau de bruit du signal temporel vidéo acquis ; ou
- comparaison (E3f) de la contribution par rapport au niveau de bruit; comprend un calcul de moyenne, notamment pondérée par zone d'intérêt, ou de médiane desdites zones d'intérêt de manière à ce que le rapport signal sur bruit calculé soit global.

**11.** Procédé selon l'une quelconque des revendications précédentes, comportant une étape d'évaluation (E4) , à partir d'une deuxième série d'images de l'acquisition, d'une présence de fraude par présentation par :

- détermination (E4b) d'au moins une surface caractéristique, dans chaque image de la deuxième série, ladite surface caractéristique étant commune aux images de la deuxième série,
- détermination (E4c) d'un signal temporel observé par surface caractéristique,
- estimation (E4d), par surface caractéristique, d'une contribution du signal imposé au signal observé de manière à former un vecteur de retour,
- détermination (E4e) d'un score par application d'un classifieur audit vecteur, ledit classifieur étant notamment mis en œuvre par un réseau de neurones

et l'étape d'autorisation (E6) de poursuite de l'accès à la source de données étant fonction du score déterminé.

**12.** Procédé selon l'une quelconque des revendications 9 à 11, dans lequel la zone d'intérêt ou la surface caractéristique appartient à une région d'intérêt imageant tout ou partie d'un visage.

**13.** Procédé selon l'une quelconque des revendications précédentes, comportant une étape d'évaluation (E5), à partir d'une troisième série d'images de l'acquisition, d'une présence de fraude spécifique par recapture ou injection par :

- détermination (E5a) d'une latence observée en fonction de la fréquence fondamentale du signal temporellement variable périodique imposé et d'un déphasage estimé entre le signal temporel périodique imposé et un signal temporel observé représentatif des valeurs de pixels des images de la troisième série d'images sur tout ou partie de la région d'intérêt détectée commune auxdites images de la troisième série d'images,
- calcul (E5b) d'une différence entre la latence observée et une latence de référence obtenue préalablement pour ledit terminal (1) ou pour un même modèle de terminal,

et l'autorisation (E6) de poursuite de l'accès à la source de données étant fonction de la différence de latence calculée.

**14.** Programme informatique comprenant des instructions adaptées à la mise en œuvre de chacune des étapes du procédé de sécurisation d'accès distant à une source de données selon l'une quelconque des revendications 1 à 13 lorsque ledit programme est exécuté sur un ordinateur.

**15.** Moyen de stockage non transitoire d'informations, amovible ou non, partiellement ou totalement lisible par un ordinateur ou un microprocesseur comportant des instructions de code d'un programme informatique pour l'exécution de chacune des étapes du procédé selon l'une quelconque des revendications 1 à 13.

[Fig. 1]

Fig. 1

[Fig. 2]

Fig. 2

[Fig. 3]

Fig. 3

[Fig. 4]

Fig. 4

[Fig. 5]

Fig. 5

Europäisches
Patentamt

European
Patent Office

Office européen
des brevets

# RAPPORT DE RECHERCHE EUROPEENNE

Numéro de la demande

EP 25 17 2060

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/195288 A1 (HOYOS HECTOR [US] ET AL) 9 juillet 2015 (2015-07-09) <br> * alinéa [0012]; figures 3-7 * <br> * alinéa [0058] * <br> * alinéa [0169] * <br> * alinéa [0171] * <br> * alinéa [0173] - alinéa [0180] * <br> * alinéa [0184] - alinéa [0189] * <br> * alinéa [0192] - alinéa [0193] * <br> * alinéa [0197] * <br> ----- | 1-15 | INV. <br> G06F21/32 <br> G06V40/16 <br> G06V40/40 <br> G06V10/141 |
| A | US 2016/071275 A1 (HIRVONEN DAVID [US]) 10 mars 2016 (2016-03-10) <br> * alinéa [0001] * <br> * alinéa [0003] - alinéa [0008] * <br> * alinéa [0035] - alinéa [0040] * <br> * alinéa [0042] - alinéa [0047] * <br> ----- | 1-15 | |
| A | US 2018/122066 A1 (PRASAD PRATHOSH A [IN] ET AL) 3 mai 2018 (2018-05-03) <br> * alinéas [0003], [0013] - alinéa [0030] * <br> ----- | 1-15 | |

**DOMAINES TECHNIQUES RECHERCHES (IPC)**

G06F
G06V

Le présent rapport a été établi pour toutes les revendications

| Lieu de la recherche | Date d'achèvement de la recherche | Examinateur |
|---|---|---|
| Munich | 3 juin 2025 | Barla Harter, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 25 17 2060

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-06-2025

| Document brevet cité au rapport de recherche | Date de publication | Membre(s) de la famille de brevet(s) | Date de publication |
|---|---|---|---|
| US 2015195288 A1 | 09-07-2015 | US 2014337930 A1 | 13-11-2014 |
| | | US 2015195288 A1 | 09-07-2015 |
| | | US 2016205096 A1 | 14-07-2016 |
| | | US 2018260553 A1 | 13-09-2018 |
| US 2016071275 A1 | 10-03-2016 | AU 2015315156 A1 | 23-03-2017 |
| | | AU 2018247216 A1 | 01-11-2018 |
| | | BR 112017004427 A2 | 05-12-2017 |
| | | CA 2960397 A1 | 17-03-2016 |
| | | CN 107077602 A | 18-08-2017 |
| | | EP 3192008 A2 | 19-07-2017 |
| | | ES 2688399 T3 | 02-11-2018 |
| | | JP 6257840 B2 | 10-01-2018 |
| | | JP 2017534102 A | 16-11-2017 |
| | | KR 20170052636 A | 12-05-2017 |
| | | MX 359546 B | 02-10-2018 |
| | | RU 2017111779 A | 10-10-2018 |
| | | SG 11201701855R A | 27-04-2017 |
| | | US 2016071275 A1 | 10-03-2016 |
| | | US 2017053406 A1 | 23-02-2017 |
| | | WO 2016040487 A2 | 17-03-2016 |
| US 2018122066 A1 | 03-05-2018 | AUCUN | |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3100074

- FR 1661737

**Littérature non-brevet citée dans la description**

- **GUO, X** ; **LI, S** ; **YU, J.** ; **ZHANG, J** ; **MA, J** ; **MA, L.** ; **LING, H.** PFLD: A practical facial landmark detector. *arXiv preprint arXiv:1902.10859*, 2019
- **WANG, B** ; **CHANG, X** ; **LIU, C.** Skin detection and segmentation of human face in color images. *International Journal of Intelligent Engineering and Systems*, 2011, vol. 4 (1), 10-17

- **FU, Z.** ; **HONG, S.** ; **LIU, M.** ; **LAGA, H** ; **BENNA-MOUN, M.** ; **BOUSSAID, F.** ; **GUO, Y**. Multi-stage information diffusion for joint depth and surface normal estimation. *Pattern recognition*, 2023, vol. 141, 109660